# EUROPEAN PATENT APPLICATION

(11) **EP 1 788 561 A1**
(43) Date of publication of application: **23.05.2007**
(21) Application number: 05778565.1
(22) Date of filing: 07.09.2005
(51) Int. Cl.: G11B 7/0045, G11B 7/007, G11B 7/125

(54) **INFORMATION RECORDING MEDIUM, INFORMATION RECORDING DEVICE AND METHOD AND COMPUTER PROGRAM**

(30) Priority: 09.09.2004 JP 2004262615
(71) Applicant: Pioneer Corporation, Tokyo 153-8654 (JP)
(72) Inventor: HORIKAWA, Kunihiko, c/o PIONEER CORPORATION, Tokorozawa-shi, Saitama 3598522 (JP); KURODA, Kazuo, c/o PIONEER CORPORATION, Tokorozawa-shi, Saitama 3598522 (JP); TANIGUCHI, Shoji, c/o PIONEER CORPORATION, Tokorozawa-shi, Saitama 3598522 (JP); KATO, Masahiro,c/o PIONEER CORPORATION, Tokorozawa-shi, Saitama 3598522 (JP); MURAMATSU, Eiji, c/o PIONEER CORPORATION, Tokorozawa-shi,S aitama 3598522 (JP)
(74) Representative: Viering, Jentschura & Partner
(86) International application number: PCT/JP2005/016393
(87) International publication number: WO 2006/028114

(57) **Abstract**

An information recording medium, provided with: a first recording layer (L0 layer) to record therein record information by irradiating laser light (LB); and a second recording layer (L1 layer) to record therein the record information by irradiating the laser light through the first recording layer, the second recording layer having a first calibration area (113) which is to record therein pattern information for obtaining an optimum power of the laser light and which corresponds to a recording area (104) of the first recording layer in which the record information is unrecorded, a head portion of the first calibration area being disposed at a position where it is displaced by a predetermined distance toward a direction of recording the pattern information, on the basis of a head portion of the recording area of the first recording layer in which the record information is unrecorded.

## Description

### Technical Field

The present invention relates to an information recording medium, such as a DVD, an information recording apparatus and method, such as a DVD recorder, and a computer program which makes a computer function as the information recording apparatus.

### Background Art

For example, in the information recording medium, such as an optical disc, like a CD-ROM (Compact Disc-Read Only Memory), a CD-R (Compact Disc-Recordable), a DVD-ROM and the like, there is developed a multiple layer or multilayer type, or dual layer type optical disc and so on, in which a plurality of recording layers are laminated on the same substrate. More specifically, such a dual layer type (i.e. two-layer type) optical disc has a first recording layer (referred to as a "L0 layer" in this application), as the first layer, which is located on the front (i.e. a side closer to an optical pickup) as viewed from a laser light emission side in recording information on the information recording apparatus, and further has a semi-transparent reflective coating or film, located on the rear thereof (i.e. a side farther from the optical pickup). As the second recording layer, it has a second recording layer (referred to as a "L1 layer" in this application), located on the rear of the semitransparent reflective coating through a middle layer, such as an adhesive layer, and further has a reflective film located on the rear thereof. In preparing such a multiple layer type information recording medium, the L0 layer and the L1 layer are individually formed and pasted in the end, to thereby prepare the two-layer type optical disc at a low cost.

In the information recording apparatus, such as a CD recorder, for recording information onto such a two-layer type optical disc, the information is recorded into the L0 layer in a rewritable method or irreversible change recording method by heat or the like, by focusing the laser light for recording onto the L0 layer, and the information is recorded into the L1 layer in a rewritable method or irreversible change recording method by heat or the like, by focusing the laser beam onto the L1 layer.

On the other hand, in an information recording / reproducing apparatus for recording information onto the information recording medium, such as an optical disc, the optimum power of a recording power is set by an OPC (Optimum Power Calibration) process, depending on the type of the optical disc, the type of the information recording apparatus, recording rate of the information recording / reproducing apparatus and so on. That is, the calibration of the recording power of the laser beam is performed. By this, it is possible to realize an appropriate recording operation on the optical disc. For example, if the optical disc is loaded and a writing command is inputted, data for test writing is recorded into an OPC area, with sequentially changing the optical intensity, so that a so-called "test writing process" is performed. Then, the data for test writing recorded in this manner is reproduced, and this reproduction result is judged by a predetermined estimation standard, to thereby set the optimum power (Patent document 1). Moreover, even from the OPC performed at the same time of an actual recoding operation (so-called running OPC), the optimum power can be set.
Patent document 1: Japanese Patent No. 3159454

### Disclosure of Invention

### Subject to be solved by the Invention

On the two-layer type optical disc, the OPC is performed on the inner or outer circumferential side in each recording layer. Namely the data for test writing is recorded on the OPC area located on the inner or outer circumferential side in each recording layer. At this time, the recoding condition of the recording layer on the front (e.g. the L0 layer) as viewed from the laser light emission side depends on the state of the recording layer on the rear (e.g. the L1 layer) as viewed from the laser light emission side (e.g. whether data is already recorded or unrecorded on the L1 layer). In the same manner, the recording condition of the recording layer on the rear (e.g. the L1 layer) as viewed from the laser light emission side depends on the state of the recording layer on the front (e.g. the L0 layer) as viewed from the laser light emission side. Therefore, it is necessary to consider a difference in the recording condition, in order to perform the OPC on the two-layer type optical disc. However, according to the OPC in the above-mentioned related art, it is performed in the OPC area provided for each recording layer, without considering the difference in the recording condition. This is why there is such a technical problem that it is difficult or impossible to obtain a truly optimum recording power in each recording layer of the two-layer type optical disc.

In particular, the data is recorded into the recording layer on the rear side after recording the data into the recording layer on the front side in most two-layer type optical disc. However, the OPC in the above-mentioned related art is performed without considering the recording condition like this recording order.

It is therefore an object of the present invention to provide an information recording medium which enables the optimum recording power to be properly obtained even if having a plurality of recording layers, as well as an information recording apparatus and method, and a computer program.

### Means for Solving the Subject

### (Information Recording Medium)

The above object of the present invention can be achieved by an information recording medium, provided with: a first recording layer to record therein record information by irradiating laser light; and a second recording layer to record therein the record information by irradiating the laser light through the first recording layer, the second recording layer having a first calibration area which is to record therein pattern information for obtaining an optimum power of the laser light and which corresponds to a recording area of the first recording layer in which the record information is unrecorded, a head portion of the first calibration area being disposed at a position where it is displaced by a predetermined distance toward a direction of recording the pattern information, on the basis of a head portion of the recording area of the first recording layer in which the record information is unrecorded.

According to the information recording medium of the present invention, various record information can be recorded into each of the plurality of recording layers (i.e. the first and second recording layers). The plurality of recording layers may be formed in a lamination structure on one side of a substrate, for example.

Particularly in the present invention, the head portion of the first calibration area is displaced by the predetermined distance, on the basis of the head portion of the unrecorded recording area of the first recording layer and which corresponds to the first calibration area. In particular, the head portion of the first calibration area is displaced toward the direction of recording the pattern information from head portion of the unrecorded area of the first recording layer. In other words, if viewed from the laser emission side, the head portion of the first calibration area does not match with (or does not correspond to) the head portion of the unrecorded recording area. Thus, in recording the pattern information, it is possible to maintain such a state that the record information is not recorded in the recording area of the first recording layer which corresponds to the first calibration area. Even if the record information is recorded into the unrecorded recording area, since the head portion of the first calibration area does not match, as a result, it is possible to record the pattern information into the first calibration area corresponding to the unrecorded recording area. Alternatively, even if there is an eccentricity or the like on the information recording medium, it is possible to eliminate an adverse effect caused by the eccentricity, because of the discrepancy or mismatch of the head portions. As a result, it is possible to record the pattern information into the first calibration area corresponding to the unrecorded recording area. By this, it is possible to properly obtain the optimum power of the laser light. By using calculation information, as described later, it is possible to calculate a more preferable optimum power corresponding to each recording condition of the plurality of recording layers, on the basis of the optimum power (or a reference power described later).

In one aspect of the information recording medium of the present invention, the recording area of the first recording layer in which the record information is unrecorded is a management information area to record therein management information for managing at least one of recording and reproduction of the record information, and a direction of recording the management information in the management information area is equal to the direction of recording the pattern information in the first calibration area.

According to this aspect, if a speed of recording the pattern information into the first calibration area is faster than a speed of recording the management information into the management information area, it is possible to maintain such a state that the record information is not recorded in the first recording layer, in recording the pattern information. By this, it is possible to properly obtain the optimum power.

In another aspect of the information recording medium of the present invention, the predetermined distance corresponds to at least an eccentricity between the first recording layer and the second recording layer.

According to this aspect, even if there is an eccentricity on the information recording medium having the plurality of recording layers, it is possible to eliminate an adverse effect caused by the eccentricity, and it is possible to properly record the pattern information into the first calibration area corresponding to the unrecorded recording area of the first recording layer.

In another aspect of the information recording medium of the present invention, at least one of ratio information which indicates a ratio of the optimum power with respect to a predetermined reference value, difference information which indicates a difference between the reference value and the optimum power, and the optimum power is recorded in at least one of the first recording layer and the second recording layer.

According to this aspect, it is possible to obtain the optimum power (or an optimum power in a predetermined recording condition), relatively easily, by referring to the ration information, the difference information and the like.

### (Information Recording Apparatus)

The above object of the present invention can be also achieved by an information recording apparatus, provided with: a recording device capable of recording the record information onto the above-mentioned information recording medium of the present invention (including its various aspects) on which the first recording layer has a second calibration area which is to record therein the pattern information and which corresponds to a recording area of the second recording layer in which the record information is unrecorded; a calibrating device for obtaining a reference power of the laser light by controlling the recording device to record the pattern information into at least one of the first calibration area and the second calibration area; a calculating device for calculating an optimum power of the laser light in recording the record information into at least one of the first recording layer and the second recording layer, on the basis of the reference power; and a controlling device for controlling the recording device so that the direction of recording the pattern information in the first calibration area is equal to a direction of recording the record information in the recording area of the first recording layer in which the record information is unrecorded.

According to the information recording apparatus of the present invention, various record information can be recorded into each of the plurality of recording layers (i.e. the first and second recording layers). The plurality of recording layers may be formed in a lamination structure on one side of a substrate, for example. Moreover, by virtue of the operation of the calibrating device, it is also possible to obtain the reference power which is the reference of the power value of the laser light in recording the record information. Here, the "reference power" of the present invention has wide intent which represents not only the power value itself of the laser light but also various parameters to realize the power value. At this time, the calibrating device records the pattern information into both or either of the first calibration area and the second calibration area provided for the information recording medium, to thereby obtain the reference power.

Particular in the present invention, by virtue of the operation of the controlling device, the direction of recording the pattern information in the first calibration area is equal to the direction of recording the record information in the recording area of the first recording layer in which the record information is unrecorded. Thus, if the record information is recorded into the unrecorded recording area, it is possible to further record the pattern information in the first calibration area corresponding to the unrecorded recording area of the first recording layer. This is because if a speed of recording the pattern information into the first calibration area is faster than a speed of recording the record information into the unrecorded recording area, the record information is not recorded in advance in the first recording layer corresponding to the first calibration area into which the pattern information will be recorded from now. In other words, it is possible to surely secure or reserve the first calibration area corresponding to the unrecorded recording area, by a size corresponding to a displacement or difference between the head portion of the first calibration area and the head portion of the unrecorded recording area. Then, as described later, a speed of recording the pattern information into the first calibration area is substantially faster than a speed of recording the record information into the unrecorded recording area. Therefore, in the first calibration area, it is possible to properly obtain the reference power, without being influenced by the recording condition of the first recording layer. In addition, it is possible to properly obtain the reference power even in the second calibration area.

Then, on the basis of proper reference power, it is possible to calculate the optimum power by the virtue of the operation of the calculating device. In particular, as described later, it is possible to calculate the optimum power with consideration of the recording conditions of the plurality of recording layers. Thus, regardless of the recording state of the first recording layer, or regardless of the recording state of the second recording layer, it is possible to calculate the proper optimum power corresponding to each recording state.

Consequently, according to the information recording apparatus of the present invention, it is possible to calculate the optimum recording power of each recording layer, relatively easily, with respect to the information recording medium having the plurality recording layers.

In one aspect of the information recording apparatus of the present invention, the calibrating device is provided with: a first calibrating device for obtaining a first reference power of the laser light in a case where the record information is recorded into a recording area of the first recording layer corresponding to a recording area of the second recording layer in which the record information is unrecorded, by controlling the recording device to record the pattern information into the second calibration area; and a second calibrating device for obtaining a second reference power of the laser light in a case where the record information is recorded into a recording area of the second recording layer corresponding to the recording area of the first recording layer in which the record information is unrecorded, by controlling the recording device to record the pattern information into the first calibration area.

According to this aspect, it is possible to properly obtain the first reference power which is the reference of the laser light in the first recording layer and the second reference power which is the reference of the laser light in the second recording layer.

In another aspect of the information recording apparatus of the present invention, the optimum power includes at least one of a first optimum power which is an optimum power of the laser light in recording the record information a recording area of the first recording layer which corresponds to a recording area of the second recording layer in which the record information is unrecorded, in a case where after the record information is recorded into a recording area of the first recording layer, the recording information is recorded into a recording area of the second recording layer corresponding to the recording area of the first recording layer in which the record information is recorded; a second optimum power which is an optimum power of the laser light in recording the record information into a recording area of the first recording layer corresponding to a recording area of the second recording layer in which the record information is already recorded; a third optimum power which is an optimum power of the laser light in recording the record information into a recording area of the second recording layer corresponding to the recording area of the first recording layer in which the record information is unrecorded, in a case where after the record information is recorded into a recording area of the second recording layer, the record information is recorded into a recording area of the first recording layer corresponding to the recording area of the second recording layer in which the record information is recorded; and a fourth optimum power which is an optimum power of the laser light in recording the record information into a recording area of the second recording layer corresponding to a recording area of the first recording layer in which the record information is already recorded.

According to this aspect, it is possible to properly calculate the optimum power corresponding to various recording conditions in each of the first and second recording layers. Moreover, the first reference power and the second reference power obtained by the calibrating device can be the optimum power in a predetermined recording condition. Therefore, according to the information recording apparatus of the present invention, it is possible to properly calculate the optimum power preferably corresponding to each recording condition of the first and second recording layers.

In another aspect of the information recording apparatus of the present invention, the calculating device calculates the optimum power by using calculation information for calculating the optimum power.

According to this aspect, the calculating device can calculate the optimum power, relatively easily, on the basis of the calculation information.

In an aspect of the information recording apparatus using the calculation information, as described above, it may be further provided with a storing deice for storing the calculation information.

By such construction, the calculating device can calculate the optimum power, relatively easily, by referring to the calculation information stored in the storing deice.

In an aspect of the information recording apparatus using the calculation information, as described above, the calculating information may include ratio information which indicates a ratio of the optimum power with respect to the reference power. Alternatively, the calculating information may include difference information which indicates a difference between the reference power and the optimum power.

By such construction, it is possible to calculate the optimum power in each recording condition of the plurality of recording layers, relatively easily, by referring to the ratio information, the difference information or the like.

### (Information Recording Method)

The above object of the present invention can be also achieved by an information recording method in an information recording apparatus provided with: a recording device capable of recording the record information onto the above-mentioned information recording medium of the present invention (including its various aspects) on which the first recording layer has a second calibration area which is to record therein the pattern information and which corresponds to a recording area of the second recording layer in which the record information is unrecorded, the information recording method provided with: a recording process of recording the record information by controlling the recording device; a calibrating process of obtaining a reference power of the laser light by controlling the recording device to record the pattern information into at least one of the first calibration area and the second calibration area; a calculating process of calculating an optimum power of the laser light in recording the record information into at least one of the first recording layer and the second recording layer, on the basis of the reference power; and a controlling process of controlling the recording device so that the direction of recording the pattern information in the first calibration area is equal to a direction of recording the record information in the recording area of the first recording layer in which the record information is unrecorded.

According to the information recording method of the present invention, it is possible to receive the same various benefits as those of the above-mentioned information recording apparatus of the present invention.

Incidentally, in response to the various aspects of the information recording apparatus of the present invention described above, the information recording method of the present invention can adopt various aspects.

### (Computer Program)

The above object of the present invention can be also achieved by a computer program of instructions for recording control and for tangibly embodying a program of instructions executable by a computer provided in the above-mentioned information recording apparatus of the present invention (including its various aspects), to make the computer function as at least one of the calibrating device, the calculating device, and the controlling device.

According to the computer program of the present invention, the above-mentioned information recording apparatus of the present invention can be relatively easily realized as a computer reads and executes the second computer program from a program storage device, such as a ROM, a CD-ROM, a DVD-ROM, and a hard disk, or as it executes the computer program after downloading the program through a communication device.

Incidentally, in response to the various aspects of the information recording apparatus of the present invention described above, the computer program of the present invention can adopt various aspects.

### (Computer Program)

The above object of the present invention can be also achieved by a computer program for recording control to control a computer provided in the above-mentioned information recording apparatus of the present invention (including its various aspects), to make the computer function as at least one portion of the calibrating device, the calculating device, and the controlling device.

According to the computer program of the present invention, the above-mentioned information recording apparatus of the present invention can be relatively easily realized as a computer reads and executes the computer program from a program storage device, such as a ROM, a CD-ROM, a DVD-ROM, and a hard disk, or as it executes the computer program after downloading the program through a communication device.

Incidentally, in response to the various aspects of the above-mentioned information recording apparatus of the present invention, the first or second computer program of the present invention can also adopt various aspects.

The above object of the present invention can be also achieved by a computer program product in a computer-readable medium for tangibly embodying a program of instructions executable by a computer provided in the above-mentioned information recording apparatus of the present invention (including its various aspects), to make the computer function as at least one of the calibrating device, the calculating device, and the controlling device.

According to the computer program product of the present invention, the above-described information recording apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the above-described information recording apparatus.

The nature, utility, and further features of this invention will be more clearly apparent from the following best mode for carrying out the invention when read in conjunction described below.

As explained above, the information recording medium of the present invention is provided with the first recording layer and the second recording layer, wherein the head portion of the first calibration area is displaced by the predetermined distance on the basis of the head portion of the unrecorded area of the first recording layer. Moreover, the information recording apparatus of the present invention is provided with: the recording device; the calibrating device; the calculating device; and the controlling device. The information recording method of the present invention is provided with: the calibrating process; the calculating process; and the controlling process. Therefore, it is possible to properly calculate the optimum power, even in the information recording medium having the plurality of recording layers.

### Brief Description of Drawings

[FIG.1] FIGs. 1 are a substantial plan view showing the basic structure of an optical disc having a plurality of recording areas in an embodiment of an information recording medium of the present invention (FIG. 1(a)), and a schematic cross sectional view of the optical disc and a corresponding conceptual diagram showing a recording area structure in the radial direction (FIG. 1(b));
[FIG. 2] FIG. 2 is a data structural view conceptually showing an example of the data structure of the information recording medium in the embodiment;
[FIG. 3] FIG. 3 is a table showing conditions for recording data onto the information recording medium in the embodiment;
[FIG. 4] FIG. 4 is a block diagram conceptually showing the basic structure of an information recording apparatus of the present invention;
[FIG. 5] FIG. 5 is a flowchart showing an entire flow of the recording operation of the information recording apparatus in the embodiment;
[FIG. 6] FIG. 6 is a timing chart schematically showing one OPC process (in the case of 16 power steps) in OPC performed by the information recording apparatus in the embodiment;
[FIG. 7] FIG. 7 is a graph conceptually showing a correlation between an optimum recording laser power and asymmetry, which is calculated by the OPC performed by the information recording apparatus in the embodiment;
[FIG. 8] FIGs. 8 are tables specifically showing calculation information based on an asymmetry value, which is used for the information recording apparatus in the embodiment; and
[FIG. 9] FIGs. 9 are tables specifically showing calculation information based on a recording laser power value, which is used for the information recording apparatus in the embodiment.

### Description of Reference Codes

- 100, 100a, 100b: optical disc
- 102, 112: lead-in area
- 103, 113: PCA
- 104, 114: recording management information zone
- 108, 118: lead-out area
- 109, 119: middle area
- 120: calculation information
- 300: information recording apparatus
- 352: optical pickup
- 354: CPU
- 355: memory
- 358: LD driver
- 359: OPC pattern generator

### Best Mode for Carrying Out the Invention

Best mode for carrying out the present invention will be explained in order by a unit of embodiment.

Embodiments of the present invention will be explained hereinafter with reference to the drawings.

### (Embodiment of the Information Recording Medium)

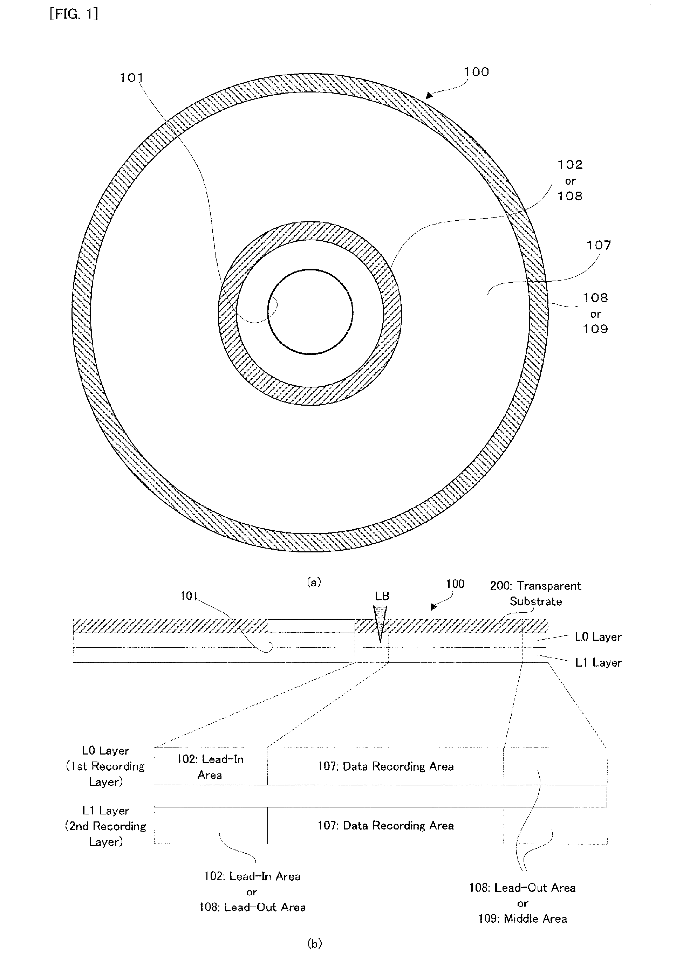

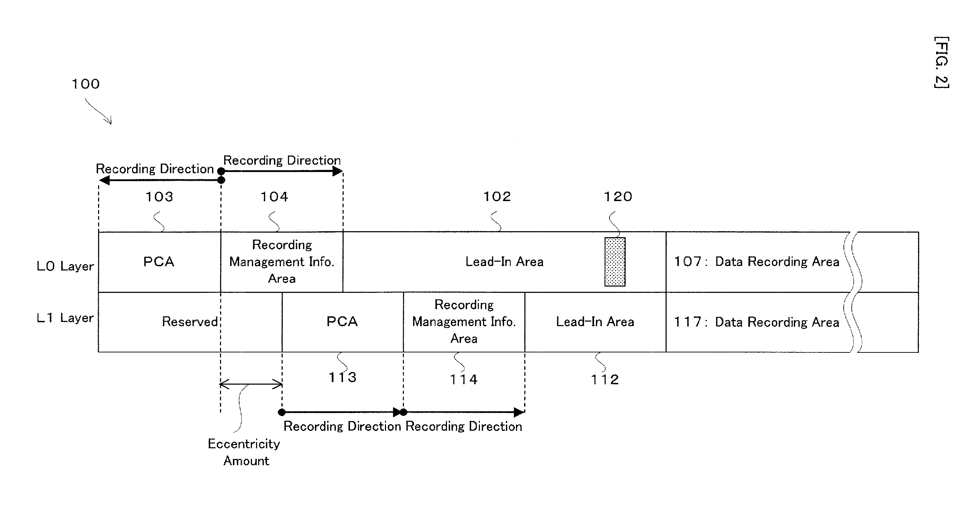

At first, with reference to FIGs. 1 and FIG. 2, an embodiment according to the information recording medium of the present invention will be discussed.

At first, with reference to FIG. 1(a) and FIG. 1(b), the basic structure of an optical disc in the embodiment of the recording medium of the present invention will be discussed. FIG. 1(a) is a substantial plan view showing the basic structure of an optical disc having a plurality of recording areas in the embodiment of the information recording medium of the present invention, and FIG. 1(b) is a schematic cross sectional view of the optical disc and a corresponding conceptual diagram showing a recording area structure in the radial direction.

As shown in FIG. 1(a) and FIG. 1(b), an optical disc 100 has a recording surface on a disc main body with a diameter of about 12 cm, as is a DVD. On the recording surface, the optical disc 100 is provided with: a lead-in area 102; a data recording area 107; and a lead-out area 108 or a middle area 109, with a center hole 101 as the center. Then, recording layers and the like are laminated on a transparent substrate 200 of the optical disc 100. In the recording area of each of the recording layers, tracks, such as groove tracks and land tracks, are alternately placed, spirally or concentrically, with the center hole 101 as the center. On the track, data is divided and recorded by a unit of ECC block. The ECC block is a data management unit by a pre-format address in which record information is error-correctable.

Incidentally, the present invention is not particularly limited to the optical disc having these three areas. For example, even if the lead-in area 102, the lead-out area 108 or the middle area 109 does not exist, a data structure explained below can be constructed. Moreover, as described later, the lead-in area 102, the lead-out area 108 or the middle area 109 may be further segmentized.

Particularly, the optical disc 100 in the embodiment, as shown in FIG. 1(b), has such a structure that a L0 layer and a L1 layer, which constitute one example of the "first and second record layers" of the present invention as descried later, respectively, are laminated on the transparent substrate. Upon the recording / reproduction of such a two-layer type optical disc 100, the recording / reproduction in the L0 layer or the L1 layer is performed, depending on which recording layer has the focus position of laser light LB, irradiated from the upper to the lower side in FIG. 1(b).

Moreover, the optical disc 100 in the embodiment is not limited to a two-layer single sided type, i.e., a dual layer type, but may be a two-layer double sided type, i.e., a dual layer double sided type. Furthermore, the optical disc 100 in the embodiment is not limited to the optical disc having the two recording layers, as described above, but may be an optical disc of a multilayer type which has three or more layers.

Incidentally, the recording / reproduction procedure of the two-layer type optical disc in an opposite track path manner and a parallel track path manner and the data structure of each layer will be discussed later.

Next, with reference to FIG. 2, the data structure of the information recording medium in the embodiment will be discussed in more details. FIG. 2 is a data structural view conceptually showing an example of the data structure of the information recording medium in the embodiment.

As shown in FIG. 2, the L0 layer is provided with: a PCA (Power Calibration Area) 103, which is one specific example of the "second calibration area" of the present invention; a recording management information area 104; a lead-in area 102; a data recording area 107; and a not-illustrated lead-out area 108. Moreover, the L1 layer is provided with: a reserved area; a PCA 113, which is one specific example of the "first calibration area" of the present invention; a recording management information area 114; a lead-in area 112; a data recording area 117; and a not-illustrated lead-out area 118. In other words, the optical disc 100 is an optical disc in the parallel track path manner.

The PCA 103 and the PCA 113 are areas used for a process of obtaining an optimum recording laser power (i.e. the calibration of a recording laser power). In particular, the PCA 103 is used to obtain the optimum recording laser power on the L0 layer, while the PCA 113 is used to obtain the optimum recording laser power on the L1 layer. The term "optimum" herein widely includes not only a most appropriate case in a literal sense, but also such a degree that the data can be properly recorded. More preferably, it may be to such a degree that the influence of asymmetry has no effect on a recording operation, or that the reproduction error rate and reproduction jitter value of the recorded data are 0 or in a low state to hardly influence the recording operation. For example, after the test writing of an OPC pattern is completed, the test-written OPC pattern is reproduced and the reproduced OPC pattern is sampled sequentially, to thereby obtain the optimum recording laser power. Incidentally, the OPC operation will be discussed in detail later.

Into the recording management information areas 104 and 114, various control information (e.g. a disc status, recording strategy information, an optimum recording laser power value obtained by the OPC or the like, etc.) is recorded to control the recording of the data onto the optical disc 100. Into the recording management information area 104, mainly, various control information may be recorded to control the recording of the data into the L0 layer. Into the recording management information area 114, mainly, various control information may be recorded to control the recording of the data into the L1 layer. The various control information is recorded, as needed, by the operation of an information recording apparatus, described later.

The reserved area is a preliminary recording area of the optical disc 100. For example, in a special case, such as a case where it is desired to prepare a new area, the recording area of the reserved area is used to prepare the new area. Therefore, normally, it is preferable not to record data in advance in the reserved area. Moreover, in order not to use a recording area of the reserved area corresponding to the unrecorded part of the PCA 103, it is preferable to prepare the new area by using a recording area of the reserved area except the recording area corresponding to the unrecorded part of the PCA 103. Specifically, considering that a recording area of the PCA 103 used for the recording of the OPC pattern is assigned from the relatively outer circumferential side to the relatively inner circumferential side, it is preferable to use the reserved area to prepare the new area from the most outer circumferential side of the reserved area toward the inner circumferential side of the reserved area.

In particular, in the embodiment, calculation information 120 is recorded in the lead-in area 102. The calculation information 120 includes ratio information, difference information and / or absolute value of an asymmetry value, an optimum recording laser power or modulated amplitude as described later. The calculation information 120 may be recorded on the optical disc 100, as a recording pit or a recording mark, or as a wobble or a land pre-pit (LPP).

Incidentally, the calculation information 120 is not necessarily recorded in the lead-in area 102, but may be recorded in the lead-in area 112 of the L1 layer, for example, or the other recording areas. Moreover, if the information recording apparatus described later stores the calculation information 120, it is not necessarily recorded on the optical disc 100.

Moreover, particularly in the embodiment, the head portion of the PCA 113 is located in the more outer direction, as compared to the head portion of the recording management information area 104. The size corresponding to a displacement or difference between the head portion of the PCA 113 and the head portion of the recording management area 104 may correspond to the eccentricity of the optical disc 100 (e.g. an eccentricity caused by a pasting error, an eccentricity caused by the deviation of the rotation center of the disc, or an eccentricity caused by a disc warp, etc.). The eccentricity is no more than several tens *µ*m order; however, since the maximum value of the eccentricity which is allowed on the DVD standard is 70 µm, for example, each of the head portions may be shifted only by a size corresponding to the maximum value. Alternatively, it may be greater or less than the size; however, more preferably, it has a size obtained by adding a suitable margin to the size corresponding to the eccentricity. Alternatively, if it is constructed not to perform the OPC in a vicinity area (e.g. an area having the size corresponding to the eccentricity, etc.) of the head portion of the PCA 113, the head portion of the PCA 113 may be aligned with the head portion of the recording management information area 104.

Then, the recording direction of the data (e.g. an OPC pattern described later) in the PCA 113 is the same as that of the data (e.g. various control information) in the recording management information area 104, which is from the inner circumferential side to the outer circumferential side. In addition, the recording direction of the data in the recording management information area 114 is also the outer direction, as in the above areas. On the other hand, the recording direction of the data in the PCA 103, as opposed to them, is from the outer circumferential side to the inner circumferential side.

As described above, by shifting or displacing the head portion of the PCA 113 to the outer circumferential side from the head portion of the recording management information area 104, it is possible to record the OPC pattern into the PCA 113 in such a situation that the various control information is not recorded in the recording management information area 104. In particular, the recording direction of the PCA 113 is the same as that of the recording management information area 104, so that even if the various control information is recorded into the recording management information area 104, it is possible to record the OPC pattern into the PCA 113 in such a situation that the various control information is not recorded in the recording management information area 104, by recording the OPC pattern into the PCA 113 located on the more outer circumferential side than the recording management area 104. Moreover, if a speed at which the various control information is recorded into the recording management information area 104 is faster than a speed at which the OPC pattern is recorded into the PCA 113, it is possible to record the OPC pattern into the PCA 113 in such a situation that the various control information is not recorded in the recording management information area 104.

In this regard, the OPC pattern to be recorded into the PCA 113 has a size corresponding to 1 ECC block to 20 ECC blocks (which is substantially an average of 2 ECC blocks), and is generally recorded upon loading of the optical disc 100. On the other hand, the various control information to be recorded into the recording management information area 104 substantially has a size corresponding to 1 ECC block, and is merely recorded upon ejection. Therefore, a speed at which the OPC pattern is recorded into the PCA 113 is faster than a speed at which the various control information is recorded into the recording management information area 104. Thus, it is substantially possible to realize the recording of the OPC pattern into the PCA 113 in such a situation that the various control information is not recorded in the recording management information area 104.

Thus, in the PCA 113, it is possible to obtain the optimum recording laser power under a recording condition that the data is recorded into the L1 layer while the data being not recorded in the L0 layer all the time or almost all the time. Moreover, in the PCA 103, it is possible to obtain the optimum recording laser power under a recording condition that the data is recorded into the L0 layer while the data being not recorded in the L1 layer all the time or almost all the time.

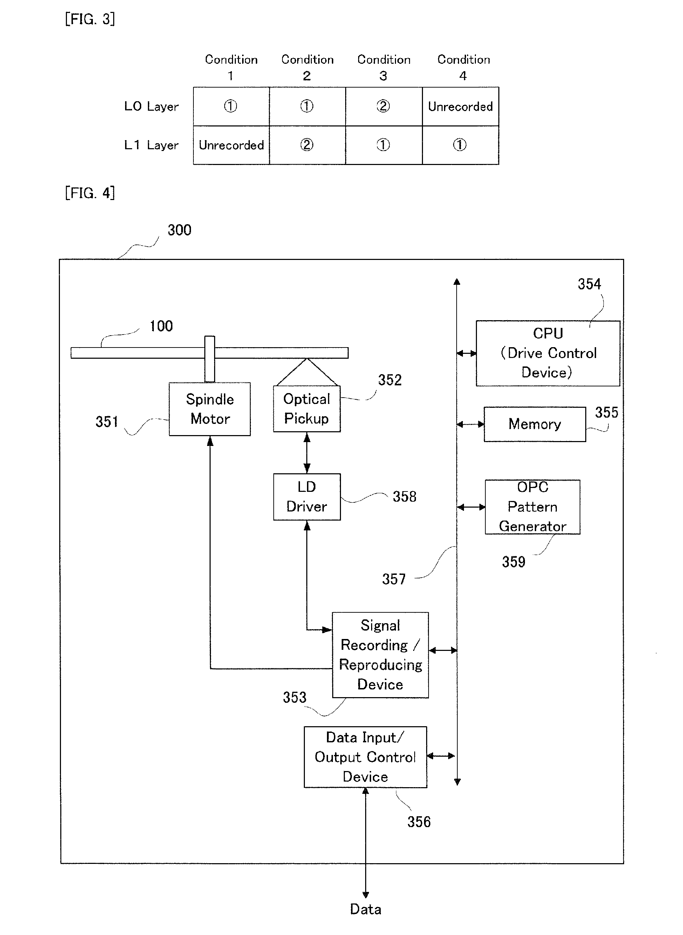

Now, specifically, the recording condition of the two-layer type optical disc will be discussed with reference to FIG. 3. FIG. 3 is a table showing conditions for recording data onto the information recording medium in the embodiment.

As shown in FIG. 3, there are divided three recording conditions of conditions 1, 2, and 3 in the L0 layer. Moreover, there are divided three recording conditions of conditions 2, 3, and 4 in the L1 layer. Numbers surrounded in a circle indicate the order of data recording in each recording layer.

Specifically, the recording condition 1 of the L0 layer indicates a case where the data is recorded into a recording area of the L0 layer which corresponds to a recording area of the L1 layer in which the data is unrecorded. In particular, even after the data is recorded into the L0 layer (particularly, even in reproducing the data), the data is not recorded into the corresponding recording area of the L1 layer.

The recording condition 2 of the L0 layer is the same as the recording condition 1 in the point that it indicates the case where the data is recorded into a recording area of the L0 layer which corresponds to a recording area of the L1 layer in which the data is unrecorded. In particular, the recording condition 2 indicates a case where the data is recorded into the corresponding recording area of the L1 layer after the data is recorded into the L0 layer (particularly, in reproducing the data). This is because the reproduction quality (e.g. the asymmetry value of a reproduction signal, etc.) of the data recorded in the L0 layer differs depending on whether the data is recorded in the corresponding L1 layer in reproducing the data recorded in the L0 layer, even if the data is not recorded in the corresponding L1 layer in recording the data into the L0 layer.

The recording condition 3 of the L0 layer indicates a case where the data is recorded into a recording area of the L0 layer which corresponds to a recording area of the L1 layer in which the data is already recorded. In other words, it indicates a case where the data is recorded into the L0 layer after the data is recorded into the L1 layer.

Next, the recording condition 2 of the L1 layer indicates a case where the data is recorded into a recording area of the L1 layer which corresponds to a recording area of the L0 layer in which the data is already recorded. In other words, it indicates a case where the data is recorded into the L1 layer after the data is recorded into the L0 layer.

The recording condition 3 of the L1 layer is the same as the recording condition 4 in the point that it indicates the case where the data is recorded into a recording area of the L1 layer which corresponds to a recording area of the L0 layer in which the data is unrecorded. In particular, the recording condition 3 indicates a case where the data is recorded into the corresponding recording area of the L0 layer after the data is recorded into the L1 layer (particularly, in reproducing the data).

The recording condition 4 of the L1 layer indicates the case where the data is recorded into a recording area of the L1 layer which corresponds to a recording area of the L0 layer in which the data is unrecorded. In particular, the data is not recorded into the corresponding recording area of the L0 layer even after the data is recorded into the L1 layer (particularly, even in reproducing the data).

As described above, each of the L0 layer and the L1 layer has the above-mentioned three recording conditions. There are some cases where the optimum recording laser power varies in each of the recording conditions. The optimum recording laser power obtained by the OPC performed in the above-mentioned PCA 103 corresponds to an optimum recording laser power in the recording condition 1 of the L0 layer (i.e. one specific example of the "first reference power" of the present invention). Moreover, the optimum recording laser power obtained by the OPC performed in the above-mentioned PCA 113 corresponds to an optimum recording laser power in the recording condition 4 of the L1 layer (i.e. one specific example of the "second reference power" of the present invention).

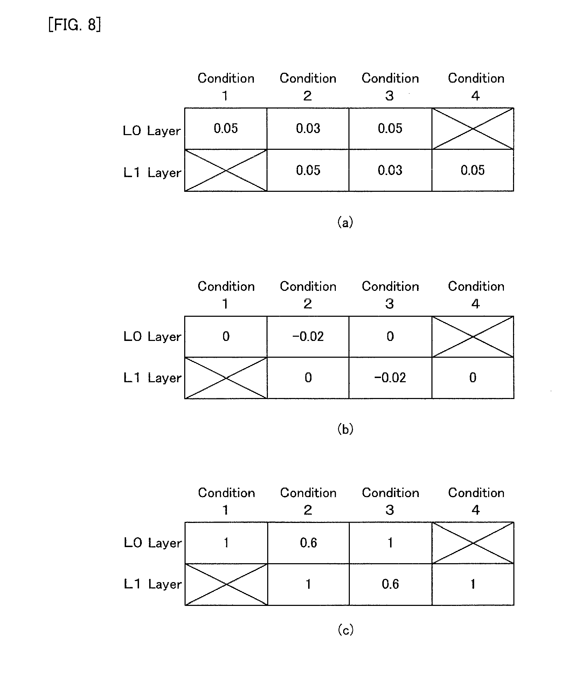

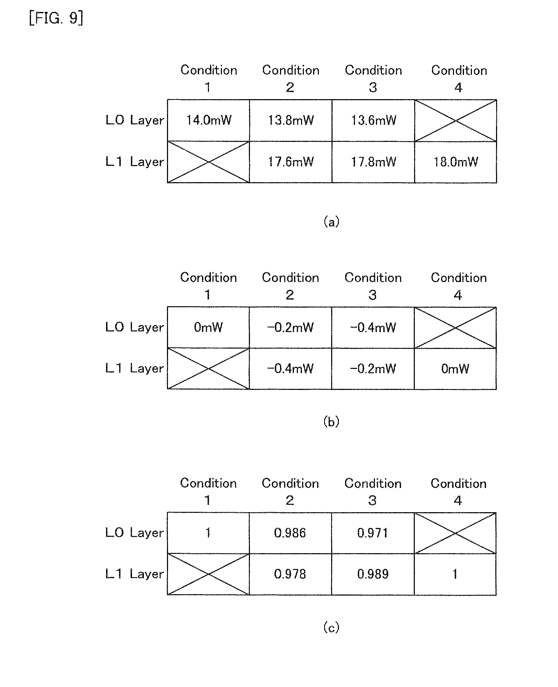

Then, using the calculation information 120 makes it possible to calculate the optimum recording laser power in the recording conditions (i.e. the conditions 2 and 3 of the L0 layer and the conditions 2 and 3 of the L1 layer) other than the recording conditions in which the optimum recording laser power is obtained from the OPC. The calculation operation will be discussed in detail later (refer to FIGs. 8 and FIGs. 9). Moreover, if there is included information (e.g. a ratio and difference, etc., described later) to calculate the optimum recording laser power in the recording condition 4 of the L1 layer (i.e. the "second reference power" of the present invention) from the optimum recording laser power in the recording condition 1 of the L0 layer (i.e. the "first reference power" of the present invention), or if there is included information to calculate the optimum recording laser power in the recording condition 1 of the L0 layer from the optimum recording laser power in the recording condition 4 of the L1 layer, it is possible to calculate the optimum recording laser power in each of the recording conditions, by obtaining at least one of the optimum recording laser power in the recording condition 1 of the L0 layer and the optimum recording laser power in the recording condition 4 of the L1 layer from the OPC.

Consequently, according to the optical disc 100 in the embodiment, it is possible to calculate the optimum recording laser power in each of all the recording conditions of the two-layer type optical disc, as shown in FIG. 3. Thus, even in any case of the recording conditions of the two-layer type optical disc, it is possible to properly record the data. Namely, there is such and advantage that it is possible to improve the recording quality of the data, which results in the improvement of the reproduction quality of the recorded data.

Moreover, if the absolute value of the optimum recording laser power is included as the calculation information 120, for example, it is unnecessary to perform the OPC etc. under all the recording conditions. Thus, there is also such an advantage that it is possible to reduce the number of times to perform the OPC. As a result, it is possible to receive various benefits, such as effectively using the recording capacity of the PCA, simplifying the recording operation, improving a recording operation completion speed, and reducing a processing load on the information recording apparatus.

Incidentally, the PCA 103 and PCA 113 are not necessarily located as shown in FIG. 2, but may be located in the lead-in area 102, or the lead-out area 108 and the middle area 109, or the data recording area 107 and the other areas. Moreover, there may be a plurality of PCAs 103 in the L0 layer, or there may be a plurality of PCAs 113 in the L1 layer In any cases, it is enough that the data is not recorded in a recording area of the L1 layer which corresponds to the PCA 103 (particularly, a recording area to record therein the OPC pattern) in recording the OPC pattern into the PCA 103. It is enough if the data is not recorded in a recording area of the L0 layer which corresponds to the PCA 113 (particularly, a recording area to record therein the OPC pattern) in recording the OPC pattern into the PCA 113.

In the above-mentioned explanation, the optical disc in the parallel track path manner will be discussed as a specific example. However, it is obvious that an optical disc in the opposite track path manner can receive the above-mentioned various benefits, if adopting the same data structure. Moreover, even an optical disc of a multilayer type having three or more layers can also receive the above-mentioned various benefits, if adopting the same data structure.

### (Embodiment of Information Recording Apparatus)

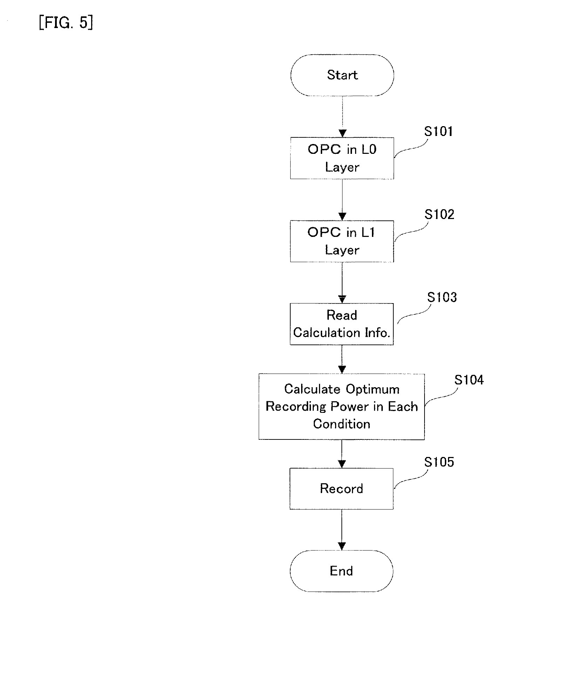

Next, the information recording apparatus in the embodiment of the present invention will be explained with reference to FIG. 4 to FIGs. 9.

### (1) Basic Structure

At first, with reference to FIG. 4, the basic structure of the information recording apparatus in the embodiment will be discussed. FIG. 4 is a block diagram conceptually showing the basic structure of the information recording apparatus in the embodiment.

As shown in FIG. 4, an information recording apparatus 300 is an apparatus for recording information onto the optical disc 100, and reading the information recorded on the optical disc 100, under the control of a CPU (drive control device) 354.

The information recording apparatus 300 is provided with: the optical disc 100; a spindle motor 351; an optical pickup 352; a signal recording / reproducing device 353; the CPU (drive control device) 354; a memory 355; a data input / output device 356; a Laser Diode (LD) driver 358; an OPC pattern generator 359; and a bus 357.

The spindle motor 351 is intended to rotate and stop the optical disc 100, and operates upon accessing the optical disc. More specifically, the spindle motor 351 is constructed to rotate the optical disc 100 at a predetermined speed and stop it, under spindle servo from a not-illustrated servo unit or the like.

The optical pickup 352 is one specific example of the "recording device" of the present invention. The optical pickup 352 is to perform the recording / reproduction with respect to the optical disc 100, and is provided with a laser device, a lens, and the like. More specifically, the optical pickup 352 irradiates the optical disc 100 with a light beam, such as a laser beam, as reading light with a first power upon reproduction, and as writing light with a second power upon recording, with it modulated.

The signal recording / reproducing device 353 controls the spindle motor 351 and the optical pickup 352, to thereby perform the recording / reproduction with respect to the optical disc 100.

The CPU (drive control device) 354 is one specific example of the "controlling device" of the present invention. The CPU 354 is connected to the signal recording / reproducing device 353, the memory 355 and the like through the bus 357, and controls the entire information recording apparatus 300 by giving an instruction to each controlling device. In general, software for operating the CPU 354 is stored in the memory 355.

The memory 355 is used in the whole data processing on the information recording apparatus 300, including a buffer area for the record / reproduction data, an area used as an intermediate buffer when data is converted into the data that can be used on the signal recording / reproducing device 353, and the like. Moreover, the memory 355 is provided with: a ROM area into which a program for performing an operation as a recording device; a buffer used for compression / extension of video data; a RAM area into which a parameter required for the operation of a program or the like is stored; and the like.

Particularly in the embodiment, the memory 355 includes a semiconductor memory, such as a ROM, a RAM, and a flash memory, and may store the above-mentioned calculation information 120. However, if the calculation information 120 is recorded on the optical disc 100, the calculation information is not necessarily stored in the memory 355.

On the data input / output control device 356, the data to be recorded onto the optical disc 100 is inputted from external equipment or the like. Then, the data input / output control device 356 outputs the inputted data to the signal recording / reproducing device 353 through the bus 357. Incidentally, if the data recorded on the optical disc 100 can be reproduced, the data input / output control device 356 may be constructed to output the reproduced data to external output equipment, such as a liquid crystal display.

The OPC pattern generator 359 is one specific example of the "calibrating device" of the present invention. The OPC pattern generator 359 is used to generate a predetermined OPC pattern, which is one specific example of the "pattern information" of the present invention, by using various strategies described later.

The LD driver 358 oscillates the laser diode or the like of the optical pickup 352 at a predetermined frequency, to thereby control the laser beam irradiated from the optical pickup 352.

The information recording apparatus 300 in the embodiment, explained with reference to FIG. 4, is also an embodiment of an information recording / reproducing apparatus. Namely, the information recording apparatus 300 can reproduce the record information through the signal recording / reproducing device 353 (e.g. a head amplifier, a Radio Frequency (RF) detector, or the like). The information recording apparatus 300 in the embodiment includes the function of an information reproducing apparatus or the function of the information recording / reproducing apparatus.

### (2) Operation Principle

Next, with reference to FIG. 5 to FIGs. 9, the recording operation of the information recording apparatus 300 in the embodiment will be discussed.

At first, with reference to FIG. 5, the outline of the recording operation of the information recording apparatus 300 in the embodiment will be discussed. FIG. 5 is a flowchart conceptually showing an entire flow of the recording operation of the information recording apparatus 300 in the embodiment.

In FIG. 5, at first, if the optical disc 100 is loaded, a seek operation is performed by the optical pickup 352 under the control of the CPU 354, to thereby obtain various data for management, necessary for a recording process to the optical disc 100. On the basis of the data for management, the data is recorded onto the optical disc 100 through an interface, in accordance with an instruction from external input equipment or the like, under the control of the CPU 354.

Then, under the control of the CPU 354, an OPC process is performed, firstly in the L0 layer, and specifically, in the PCA 103 (step S101).

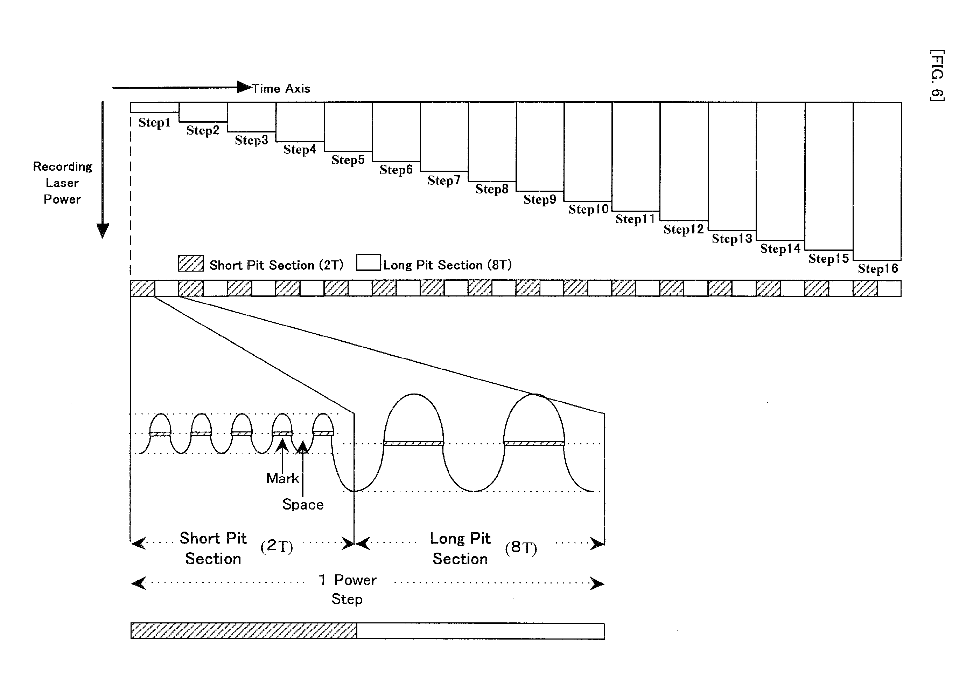

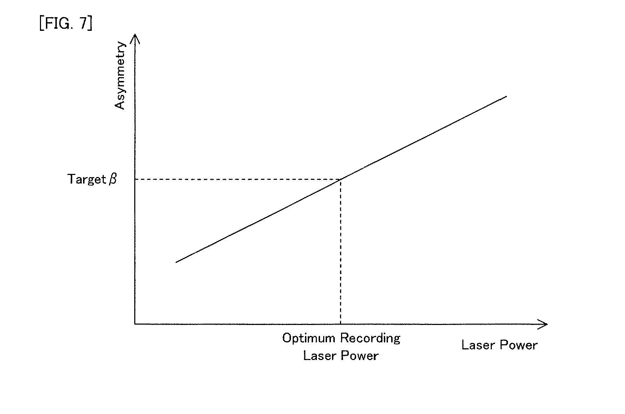

Now, a detailed explanation is given to the OPC process, with reference to FIG. 6 and FIG. 7. FIG. 6 is a timing chart schematically showing one OPC process in the case of 16 power steps. FIG. 7 is a graph conceptually showing a correlation between an optimum recording laser power and asymmetry.

At first, under the control of the CPU 354, the optical pickup 352 is displaced to the PCA 103 located in the lead-in area 102 (or the PCA 113 located in the lead-in area 112). Then, by the operations of the OPC pattern generator 359 and the LD driver 358, the recording laser power is changed over sequentially and gradually (e.g. mutually different 16-step recording laser powers), to thereby record the OPC pattern into the PCA 103 or PCA 113. Specifically, a reference OPC pattern as shown in FIG. 6 is recorded. As one example, there is a recording pattern in which a section of short pits (marks) corresponding to a 2T pulse and a section of long pits (marks) corresponding to an 8T pulse are alternately formed, with each pit (or mark) formed with an unrecorded section (space) with the same length of each pit.

The LD driver 358 drives a semiconductor laser in the optical pickup 352 in order to change the recording laser power, sequentially and gradually, in accordance with the OPC pattern outputted from the OPC pattern generator 359.

Moreover, after test writing into the PCA 103 or PCA 113 is completed, the OPC pattern which is test-written in the PCA 103 or PCA 113 is reproduced, under the control of the CPU 354. Specifically, the peak value and bottom value of envelope detection of a RF signal are sampled from the RF signal inputted to a not-illustrated envelop detector. Then, after such an OPC pattern is reproduced in accordance with the number of times to record the OPC pattern at one OPC process, for example, the optimum recording laser power is obtained. In other words, the optimum recording laser power with an almost minimum jitter value for representing the quality of recording features, for example, is obtained on the basis of the asymmetry obtained by the peak value and the bottom value.

Specifically, as shown in FIG. 7, the asymmetry value of the OPC pattern which is recorded at each of the 16-step recording laser powers is sampled, to thereby make a correlation with the recording laser power. Specifically, the graph as shown in FIG. 7 may be prepared, or a function that indicates a correlation between the recording laser power and the asymmetry may be prepared. Alternatively, a list or table that indicates a correlation between the recording laser power and the asymmetry may be prepared. Then, a recording laser power at which a target β is realized as a desired asymmetry value is the optimum recording laser power to be obtained. For example, if the target β is "0.02" and a recording laser power at which the asymmetry value is "0.02" is "18.2mW", the optimum recording laser power to be obtained is this "18.2mW".

In FIG. 5 again, as a result of the OPC process in the step S101, the optimum recording laser power in the case of the recording condition 1, which is shown in FIG. 3, of the L0 layer is obtained.

Then, the OPC process is performed in the L1 layer, and specifically in the PCA 113 (step S102). Even in this case, the above-mentioned operation is repeated, to thereby obtain the optimum recording laser power. Here, the optimum recording laser power in the case of the recording condition 4, which is shown in FIG. 3, of the L1 layer is obtained.

Then, the calculation information 120 is read (step S103). If the calculation information 120 is recorded on the optical disc 100, as shown in FIG. 2, the calculation information 120 is read from the optical disc 100. If the calculation information 120 is recorded in the memory 355 of the information recording apparatus 300, the calculation information 120 is read from the memory 355.

Incidentally, the calculation information 120 recorded on the optical disc 100 may be preferentially read. Alternatively, the calculation information 120 recorded in the memory 355 may be preferentially read. Moreover, it may be judged in which of the optical disc 100 and the memory 355 the calculation information 120 is recorded, under the control of the CPU 354. Alternatively, it may be determined which is preferentially read in accordance with the operation of the CPU 354 or the user of the information recording apparatus 300.

Then, on the basis of the optimum recording laser powers obtained in the step S101 and the step S102 and the calculation information 120 read in the step S103, the optimum recording laser power in each of recording conditions is calculated under the control of the CPU 354, which is one specific example of the "calculating device" of the present invention (step S104).

Now, the specific example of the calculation information 120 and the specific example that the optimum recording laser power is calculated in each recording condition by using the calculation information 120 will be discussed with reference to FIGs. 8 and FIGs. 9. FIGs. 8 are tables specifically showing the calculation information 120 based on an asymmetry value. FIGs. 9 are tables specifically showing the calculation information 120 based on a recording laser power value.

As shown in FIG. 8(a), the calculation information 120 may be constructed to have the target β (i.e. the absolute value of the asymmetry value which realizes the optimum recording laser power) of the optimum recording laser power in each recording condition.

For example, discussing the specific example in FIG. 8(a), in the L0 layer, the target β which realizes the optimum recording laser power in the recording condition 1 is "0.05". Moreover, the target β which realizes the optimum recording laser power in the recording condition 2 (i.e. one specific example of the "first optimum power" of the present invention) is "0.03". The target β which realizes the optimum recording laser power in the recording condition 3 (i.e. one specific example of the "second optimum power" of the present invention) is "0.05".

Moreover, in the L1 layer, the target β which realizes the optimum recording laser power in the recording condition 2 (i.e. one specific example of the "fourth optimum power" of the present invention) is "0.05". The target β which realizes the optimum recording laser power in the recording condition 3 (i.e. one specific example of the "third optimum power" of the present invention) is "0.03". The target β which realizes the optimum recording laser power in the recording condition 4 is "0.05".

Therefore, on the basis of these target β, the OPC is performed in the PCA 103 in calculating each of the optimum recording laser powers in the L0 layer. On the other hand, the OPC is performed in the PCA 113 in calculating each of the optimum recording laser powers in the L1 layer. For example, in calculating (i.e. obtaining) the optimum recording laser power in the recording condition 2 of the L0 layer, the OPC is performed in the PCA 103, and a recording laser power at which the target β is "0.03" is calculated as the optimum recording laser power in the recording condition 2 of the L0 layer.

Incidentally, if the calculation information 120 is read before the OPC operation in the step S101 in FIG. 5, it is also possible to synchronously obtain the optimum recording laser power in each recording condition of the L0 layer by one OPC operation. Moreover, if the calculation information 120 is read before the OPC operation in the step S102 in FIG. 5, it is also possible to synchronously obtain the optimum recording laser power in each recording condition of the L1 layer by one OPC operation. The same is true for each aspect of the calculation information 120 discussed later.

As shown in FIG. 8(b), the calculation information 120 may be constructed to have a difference of the target β of the optimum recording laser power in each recording condition. In other words, the difference based on a predetermined value may be regarded as the calculation information 120.

For example, discussing the specific example in FIG. 8(b), in the L0 layer, the target β which realizes the optimum recording laser power in the recording condition 1 is a reference value. The value of the target β as being the reference at this time can be calculated by the OPC operation in the step S101 in FIG. 5. The difference of the target β which realizes the optimum recording laser power in the recording condition 1 is obviously "0". The difference of the target β which realizes the optimum recording laser power in the recording condition 2 is "-0.02". The difference of the target β which realizes the optimum recording laser power in the recording condition 3 is "0". In this case, if the value of the target β in the recording condition 1 as being the reference value is "0.05", the value of the target β in the recording condition 2 is 0.05 + (-0.02) = 0.03. Moreover, the value of the target β in the recording condition 3 is 0.05 + 0 = 0.05.

In the L1 layer, the target β which realizes the optimum recording laser power in the recording condition 4 is a reference value. The difference of the target β which realizes the optimum recording laser power in the recording condition 2 is "0". The difference of the target β which realizes the optimum recording laser power in the recording condition 3 is "-0.02". The difference of the target β which realizes the optimum recording laser power in the recording condition 4 is obviously "0".

As shown in FIG. 8(c), the calculation information 120 may be constructed to have a ratio of the target β of the optimum recording laser power in each recording condition. In other words, the ratio based on a predetermined value may be regarded as the calculation information 120.

For example, discussing the specific example in FIG. 8(c), in the L0 layer, the target β which realizes the optimum recording laser power in the recording condition 1 is a reference value. The ratio of the target β which realizes the optimum recording laser power in the recording condition 1 is obviously "1". The ratio of the target β which realizes the optimum recording laser power in the recording condition 2 is "0.6". The ratio of the target β which realizes the optimum recording laser power in the recording condition 3 is "1". In this case, if the value of the target β in the recording condition 1 as being the reference value is "0.05", the value of the target β in the recording condition 2 is 0.05 × 0.6 = 0.03. Moreover, the value of the target β in the recording condition 3 is 0.05 × 1 = 0.05.

In the L1 layer, the target β which realizes the optimum recording laser power in the recording condition 4 is a reference value. The ratio of the target β which realizes the optimum recording laser power in the recording condition 2 is "1". The ratio of the target β which realizes the optimum recording laser power in the recording condition 3 is "0.6". The ratio of the target β which realizes the optimum recording laser power in the recording condition 4 is obviously "1".

As shown in FIG. 9(a), the calculation information 120 may be constructed to have the optimum recording laser power in each recording condition (i.e. the absolute value of the recording power).

For example, discussing the specific example in FIG. 9(a), in the L0 layer, the optimum recording laser power in the recording condition 1 is "14.0mW". The optimum recording laser power in the recording condition 2 is "13.8mW". The optimum recording laser power in the recording condition 3 is "13.6mW".

For example, in the L1 layer, the optimum recording laser power in the recording condition 2 is "17.6mW". The optimum recording laser power in the recording condition 3 is "17.8mW". The optimum recording laser power in the recording condition 4 is "18.OmW".

Therefore, on the basis of these calculation information 120, the recording laser power is set in accordance with each recording condition of each recording layer. In this case, it is not necessary to perform the OPC in the PCA 103 or PCA 113. Of course, the OPC may be performed.

As shown in FIG. 9(b), the calculation information 120 may be constructed to have a difference of the optimum recording laser power in each recording condition. In other words, the difference based on a predetermined recording laser power value may be regarded as the calculation information 120.

For example, discussing the specific example in FIG. 9(b), in the L0 layer, the optimum recording laser power in the recording condition 1 is a reference value. The difference of the optimum recording laser power in the recording condition 1 is obviously "0mW". The difference of the optimum recording laser power in the recording condition 2 is " - 0.2mW". The difference of the optimum recording laser power in the recording condition 3 is "-0.4mW ". In this case, if the value of the optimum recording laser power in the recording condition 1 as being the reference value is "14.0mW", the value of the optimum recording laser power in the recording condition 2 is 14.0 + (-0.2) = 13.8mW. Moreover, the value of the optimum recording laser power in the recording condition 3 is 14.0 + (-0.4) = 13.6mW.

In the L1 layer, the optimum recording laser power in the recording condition 4 is a reference value. The difference of the optimum recording laser power in the recording condition 2 is "-0.4mW". The difference of the optimum recording laser power in the recording condition 3 is "-0.2mW". The difference of the optimum recording laser power in the recording condition 4 is obviously "0mW".

As shown in FIG. 9(c), the calculation information 120 may be constructed to have a ratio of the optimum recording laser power in each recording condition. In other words, the ratio based on a predetermined recording laser power value may be regarded as the calculation information 120.

For example, discussing the specific example in FIG. 9(c), in the L0 layer, the optimum recording laser power in the recording condition 1 is a reference value. The ratio of the optimum recording laser power in the recording condition 1 is obviously "1"'. The ratio of the optimum recording laser power in the recording condition 2 is "0.986". The ratio of the optimum recording laser power in the recording condition 3 is "0.971". In this case, if the value of the optimum recording laser power in the recording condition 1 as being the reference value is "14.0mW", the value of the optimum recording laser power in the recording condition 2 is 14.0 × 0.986 = 3.8mW Moreover, the value of the optimum recording laser power in the recording condition 3 is 14.0 × 0.971 =13.6mW.

In the L1 layer, the optimum recording laser power in the recording condition 4 is a reference value. The ratio of the optimum recording laser power in the recording condition 2 is "0.978". The ratio of the optimum recording laser power in the recording condition 3 is "0.989". The ratio of the optimum recording laser power in the recording condition 4 is obviously "1".

As described above, it is possible to use the calculation information 120 that represents the absolute value, ratio, and difference which directly indicate the value of the optimum laser power, as shown in FIGs. 9. Alternatively, it is also possible to use the calculation information 120 that represents the absolute value, ratio, and difference of the asymmetry value which indirectly indicate the value of the optimum laser power, as shown in FIGs. 8. Moreover, in addition to or in place of the asymmetry value and the optimum laser power value, it is also possible to use information that represents the ratio, difference, absolute value, or the like which directly or indirectly indicate the value of another optimum laser power, which is represented by the modulated amplitude, a reproduction error rate or the like, for example, as the calculation information 120.

There may be recorded a ratio and difference, etc., in accordance with a change in the recording position on the optical disc 100 (i.e. a change of the position of the optical pickup 352 irradiating the laser beam), as the calculation information 120. For example, on the inner circumferential side and outer circumferential side of the optical disc 100, there is a possibility that the optimum recording laser power changes due to a difference in the recording features on the recording surface thereof. Therefore, the ratio, difference or recording laser power value, which is included in the calculation information 120, may have two values of both the inner circumferential side and the outer side, for example, in response to the change in the optimum recording laser power caused by the change in the recording position.

Moreover, it is also possible to use information that represents the ratio and difference of the optimum recording laser powers between the L0 layer and the L1 layer, in addition to the information shown in FIGs. 8 and FIGs. 9, as the calculation information 120. For example, "18.0mW" which is the optimum recording laser power in the recording condition 4 of the L1 layer shown in FIG. 9(a) is shown as "1.286", as the ratio information based on "14.0mW" which is the optimum recording laser power in the recording condition 1 of the L0 layer. Then, "18.0mW" which is the optimum recording laser power in the recording condition 4 of the L1 layer shown in FIG. 9(a) is shown as "+4.0mW", as the difference information based on "14.0mW" which is the optimum recording laser power in the recording condition 1 of the L0 layer. As described above, by providing the calculation information 120 which indicates a relationship between the different layers, it is possible to calculate the optimum recording powers in all the recording conditions, only from the OPC performed in either of the L0 layer and the L1 layer.

Consequently, according to the information recording apparatus 300 in the embodiment, it is possible to calculate the optimum recording laser powers in all the recording conditions of the two-layer type optical disc as shown in FIG. 3. Thus, in any recording condition of the two-layer type optical disc, it is possible to properly record the data. Specifically, it is possible to obtain a more preferable asymmetry value, reflectance, modulated amplitude, jitter value, or the like, as the features of the recorded data, and it is also possible to realize good recording sensitivity. Namely, it is possible to receive the various benefits owned by the above-mentioned optical disc 100 in the embodiment.

Incidentally, in FIG. 5, the calculation information 120 is read before the recording operation for the data; however, the calculation information 120 is not necessarily read at this time point. For example, when it is judged to actually record the data in a predetermined recording condition, the necessary calculation information may be read and the optimum recording laser power in the recording condition may be calculated. However, if the optimum recording laser power in each recording condition is calculated before the recording operation, it is unnecessary to perform the calculation operation of the recording laser power at the time of recording operation. In other words, it is enough that the power of the laser light to be oscillated is changed by the LD driver 358. Therefore, in terms of speed-up of the recording operation, it is preferable to calculate the optimum laser power before the recording operation, as shown in FIG. 5.

Moreover, the calculation information 120 may be recorded in the memory 355 in advance, by the manufacturer or maker or the like of the information recording apparatus 300, for example, upon the production thereof. Alternatively, it may be recorded, as occasion demands, by using an optical disc, such as a CD-ROM and a DVD-ROM, and removable type media, such as an IC card, a memory stick, and a SD card. Alternatively, it may be recorded, as occasion demands, through a network which adopts a wired or wireless form.

Even the calculation information 120 recorded on the optical disc 100 may be rewritten, as occasion demands, by the operation of the information recording apparatus 300, if the calculation information 120 is recorded in an rewritable aspect. Moreover, the calculation information 120 recorded on the optical disc 100 may be recorded into the memory 355. In particular, in an aspect in which the optimum recording laser power in each recording condition is subsequently calculated during the recording operation, if the calculation information 120 is recorded in the memory 355 whose reading speed is relatively fast, there is such an advantage that it is possible to reduce a time length required for the calculation of the optimum recording laser power.

Incidentally, in the above-mentioned embodiment, the two-layer type optical disc is discussed as one specific example of the optical disc 100. However, it is obvious that the same benefits can be received even on the multilayer type optical disc which has three or more layers. Namely, it is possible to properly calculate the reference power, and it is possible to calculate the optimum power under various recording conditions, relatively easily, on the basis of the calculation information corresponding to the recording condition in each recording layer.

In the abeve-mentioned embodiment, the optical disc 100 is explained as one example of the information recording medium, and the recorder related to the optical disc 100 is explained as one example of the information recording apparatus. The present invention, however, is not limited to the optical disc and the recorder thereof, and can be applied to other various high-density-recording or high-transmission-rate information recording media, and the recorders thereof.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

### Industrial Applicability

The information recording medium, the information recording apparatus and method, and the computer program according to the present invention can be applied to the high-density optical disc such as DVD or the like, and further applied to the information recording apparatus such as DVD recorder or the like. Moreover, they can be applied to an information recording apparatus or the like which is mounted on various computer equipment for consumer use or for business use, or which can be connected to various computer equipment.

## Claims

1. An information recording medium, comprising:
a first recording layer to record therein record information by irradiating laser light; and
a second recording layer to record therein the record information by irradiating the laser light through said first recording layer,
said second recording layer having a first calibration area which is to record therein pattern information for obtaining an optimum power of the laser light and which corresponds to a recording area of said first recording layer in which the record information is unrecorded,
a head portion of the first calibration area being disposed at a position where it is displaced by a predetermined distance toward a direction of recording the pattern information, on the basis of a head portion of the recording area of said first recording layer in which the record information is unrecorded.

2. The information recording medium according to claim 1, wherein
the recording area of said first recording layer in which the record information is unrecorded is a management information area to record therein management information for managing at least one of recording and reproduction of the record information, and
a direction of recording the management information in the management information area is equal to the direction of recording the pattern information in the first calibration area.

3. The information recording medium according to claim 1, wherein
the predetermined distance corresponds to at least an eccentricity between said first recording layer and said second recording layer.

4. The information recording medium according to claim 1, wherein
at least one of ratio information which indicates a ratio of the optimum power with respect to a predetermined reference value, difference information which indicates a difference between the reference value and the optimum power, and the optimum power is recorded in at least one of said first recording layer and said second recording layer.

5. An information recording apparatus, comprising:
a recording device capable of recording the record information onto the information recording medium according to claim 1 on which said first recording layer has a second calibration area which is to record therein the pattern information and which corresponds to a recording area of said second recording layer in which the record information is unrecorded;
a calibrating device for obtaining a reference power of the laser light by controlling said recording device to record the pattern information into at least one of the first calibration area and the second calibration area;
a calculating device for calculating an optimum power of the laser light in recording the record information into at least one of said first recording layer and said second recording layer, on the basis of the reference power; and
a controlling device for controlling said recording device so that the direction of recording the pattern information in the first calibration area is equal to a direction of recording the record information in the recording area of said first recording layer in which the record information is unrecorded.

6. The information recording apparatus according to claim 5, wherein said calibrating device comprises:
a first calibrating device for obtaining a first reference power of the laser light in a case where the record information is recorded into a recording area of said first recording layer corresponding to a recording area of said second recording layer in which the record information is unrecorded, by controlling said recording device to record the pattern information into the second calibration area; and
a second calibrating device for obtaining a second reference power of the laser light in a case where the record information is recorded into a recording area of said second recording layer corresponding to the recording area of said first recording layer in which the record information is unrecorded, by controlling said recording device to record the pattern information into the first calibration area.

7. The information recording apparatus according to claim 5, wherein the optimum power includes at least one of
a first optimum power which is an optimum power of the laser light in recording the record information a recording area of said first recording layer which corresponds to a recording area of said second recording layer in which the record information is unrecorded, in a case where after the record information is recorded into a recording area of said first recording layer, the recording information is recorded into a recording area of said second recording layer corresponding to the recording area of said first recording layer in which the record information is recorded;
a second optimum power which is an optimum power of the laser light in recording the record information into a recording area of said first recording layer corresponding to a recording area of said second recording layer in which the record information is already recorded;
a third optimum power which is an optimum power of the laser light in recording the record information into a recording area of said second recording layer corresponding to the recording area of said first recording layer in which the record information is unrecorded, in a case where after the record information is recorded into a recording area of said second recording layer, the record information is recorded into a recording area of said first recording layer corresponding to the recording area of said second recording layer in which the record information is recorded; and
a fourth optimum power which is an optimum power of the laser light in recording the record information into a recording area of said second recording layer corresponding to a recording area of said first recording layer in which the record information is already recorded.

8. The information recording apparatus according to claim 5, wherein said calculating device calculates the optimum power by using calculation information for calculating the optimum power.

9. The information recording apparatus according to claim 8, wherein the calculating information includes ratio information which indicates a ratio of the optimum power with respect to the reference power.

10. The information recording apparatus according to claim 8, wherein the calculating information includes difference information which indicates a difference between the reference power and the optimum power.

11. An information recording method in an information recording apparatus comprising: a recording device capable of recording the record information onto the information recording medium according to claim 1 on which said first recording layer has a second calibration area which is to record therein the pattern information and which corresponds to a recording area of said second recording layer in which the record information is unrecorded,
said information recording method comprising:
a recording process of recording the record information by controlling said recording device;
a calibrating process of obtaining a reference power of the laser light by controlling said recording device to record the pattern information into at least one of the first calibration area and the second calibration area;
a calculating process of calculating an optimum power of the laser light in recording the record information into at least one of said first recording layer and said second recording layer, on the basis of the reference power; and
a controlling process of controlling said recording device so that the direction of recording the pattern information in the first calibration area is equal to a direction of recording the record information in the recording area of said first recording layer in which the record information is unrecorded.

12. A computer program for recording control to control a computer provided in the information recording apparatus according to claim 5, to make the computer function as at least one of said calibrating device, said calculating device, and said controlling device.
